# EUROPEAN PATENT SPECIFICATION

(11) **EP 3 783 274 B1**
(45) Date of publication and mention of the grant of the patent: **07.01.2026**
(21) Application number: 18915624.3
(22) Date of filing: 12.06.2018
(51) Int. Cl.: F24H 1/10, F24H 9/12, F24H 9/20, F24H 9/14

(54) **ELECTRODE BOILER SYSTEM**
ELEKTRODEN-KESSEL-SYSTEM
SYSTÈME DE CHAUDIÈRE À ÉLECTRODES

(30) Priority: 16.04.2018 KR 20180044118
(43) Date of publication of application: 24.02.2021
(73) Proprietor: Kim, No Eul, Busan 48472 (KR)
(72) Inventor: KIM, Young Tae, Busan 48472 (KR); KIM, No Eul, Busan 48472 (KR)
(74) Representative: Marks & Clerk LLP
(86) International application number: PCT/KR2018/006671
(87) International publication number: WO 2019/203391

(56) References cited:
- EP-A1- 2 582 200
- AT-A4- 508 785
- KR-A- 20080 058 148
- KR-B1- 101 112 122
- KR-B1- 101 112 122
- KR-B1- 101 408 694
- KR-B1- 101 541 716
- KR-U- 20140 004 245

## Description

### [Technical Field]

The present invention relates to an electrode boiler system.

### [Background Art]

As technology advances, products to which various technologies are applied in the field of machinery and electronics are being developed and produced, and accordingly, various heating systems, for example, boiler systems, are being developed.

Boilers may be largely classified into industrial boilers, agricultural boilers, and household boilers. In addition, the types of boilers may be classified as a direct heating method or an indirect heating method in which a medium such as water is heated and circulated.

In addition, according to the types of energy sources of the boilers, as specific examples, boilers using petroleum, boilers using briquettes, boilers using wood, boilers using gas, boilers using electricity, etc. are being used or studied.

Among them, boilers using electricity to provide the heat source may have advantages in terms of soot and environmental problems compared to boilers using fossil fuels such as petroleum or coal.

EP2582200 discloses a heating system to heat a main heating circulation comprising an electronic heater adapted to heat a primary heating liquid, a control head, a heat exchanger comprising a first and second liquid passage for a primary and secondary heating liquid, a pump and a plurality of tubes which may be formed by an insulating material.

However, there is a limitation in implementing a boiler system while easily securing thermal efficiency and electrical stability of a boiler using electricity.

### [Disclosure]

### [Technical Problem]

The present invention provides an electrode boiler system that may increase user convenience by improving electrical stability and thermal efficiency.

### [Technical Solution]

The present invention provides an electrode boiler system according to claim 1. The electrode boiler system includes a body portion formed to receive the electrolyzed water therein; an electrode portion having a plurality of electrodes disposed in the body portion, wherein at least a portion of a plurality of electrodes contacts the electrolyzed water within the body portion; a first flow path portion through which the electrolyzed water inside the body portion flows out and moves after heated by a current applied to the electrode portion; a second flow path portion which is spaced apart from the first flow path portion and through which the electrolyzed water flows into the body portion; and a control portion to control the current applied to the electrode portion.

In the present embodiment, a receiving portion disposed between the first flow path portion and the second flow path portion and formed to receive the electrolyzed water, may be further included.

In the present embodiment, a heat exchange portion disposed between the first flow path portion and the second flow path portion may be further included, wherein the heated electrolyzed water flows into the heat exchange portion through the first flow path portion, and wherein the electrolyzed water whose temperature has decreased in the heat exchange portion flows into the body portion through the second flow path portion.

In the present embodiment, a heat receiving portion formed to be adjacent to the heat exchange portion and receiving heat from electrolyzed water in the heat exchange portion, may be further included.

In the present embodiment, a pump portion connected to the first flow path portion and controlling a flow of electrolyzed water in the first flow path portion, may be further included.

In the present embodiment, a vent portion connected to the first flow path portion and controlling a vapor pressure in the first flow path portion, may be further included.

In this embodiment, a supplementary portion connected to the second flow path portion and replenishing electrolyzed water into the second flow path portion, may be further included.

In the present embodiment, a temperature sensing portion connected to the second flow path portion and sensing a temperature of the electrolyzed water in the second flow path portion, may be further included, wherein the control portion is formed to use information about the temperature sensed by the temperature sensing portion.

In the present embodiment, a portion of a region of the body portion, the first flow path portion, or the second flow path portion, adjacent to the electrolyzed water, includes an insulating material.

In the present embodiment, a portion of a region of the body portion, the first flow path portion, or the second flow path portion, adjacent to the electrolyzed water, includes a Teflon resin.

In the present embodiment, a portion of a region of the body portion, the first flow path portion, or the second flow path portion, adjacent to the electrolyzed water, may include an anti-static Teflon resin layer.

Other aspects, features, and advantages other than those described above will become apparent from the following drawings, claims, and detailed description of the disclosure.

### [Advantageous Effects]

An electrode boiler system according to the present invention may increase user's convenience by improving electrical stability and thermal efficiency.

### [Description of Drawings]

FIG. 1 is a schematic diagram illustrating an electrode boiler system according to an embodiment of present disclosure.
FIG. 2 is a schematic diagram illustrating an electrode boiler system according to an embodiment of present disclosure.
FIG. 3 is a schematic diagram illustrating an electrode boiler system according to an embodiment of present disclosure.
FIG. 4 is a diagram illustrating an optional embodiment of a body portion of the electrode boiler system of FIG. 3.
FIG. 5 is a schematic diagram illustrating an electrode boiler system according to another embodiment of present disclosure.
FIG. 6 is a diagram illustrating an optional embodiment of a body portion of the electrode boiler system of FIG. 5.
FIG. 7 is a diagram illustrating a modified embodiment of a body portion of the electrode boiler system of FIG. 5.
FIG. 8 is a diagram illustrating an optional embodiment of a first flow path portion of the electrode boiler system of FIG. 5.
FIG. 9 is a diagram illustrating an optional embodiment of a heat exchange portion of the electrode boiler system of FIG. 5.
FIG. 10 is a diagram illustrating an optional embodiment of a second flow path portion of the electrode boiler system of FIG. 5.

### [Mode for Invention]

Hereinafter, the configuration and operation of present invention will be described in detail with reference to embodiments of present invention illustrated in the accompanying drawings.

The present disclosure is intended to illustrate specific embodiments in the drawings and to be described in detail in the detailed description, since various transformations can be applied and various embodiments can be applied. The effects and features of the present disclosure, and a method of achieving them will become apparent with reference to the embodiments described later in detail together with the drawings. However, the present invention is not limited to the embodiments disclosed below and may be implemented in various forms as defined in the appended claims.

Hereinafter, embodiments of the present disclosure will be described in detail with reference to the accompanying drawings, and when describing with reference to the drawings, the same or corresponding constituent elements are assigned the same reference numerals, and redundant descriptions thereof will be omitted.

In the following embodiments, terms such as first and second are used for the purpose of distinguishing one constituent element from other constituent elements rather than a limiting meaning.

In the following examples, the singular expression includes the plural expression unless the context clearly indicates otherwise.

In the following embodiments, terms such as include or have means that the features or elements described in the specification are present, and do not preclude the possibility that one or more other features or elements may be added.

In the drawings, components may be exaggerated or reduced in size for convenience of description. For example, the size and thickness of each component shown in the drawings are arbitrarily shown for convenience of description, and thus the present disclosure is not necessarily limited to the illustrated bar.

In the following embodiments, the x-axis, y-axis, and z-axis are not limited to three axes on a Cartesian coordinate system, and may be interpreted in a broad sense including them. For example, the x-axis, the y-axis, and the z-axis may be orthogonal to each other, but may refer to different directions that are not orthogonal to each other.

For example, two processes described in succession may be performed substantially simultaneously, or may be performed in an order opposite to the described order.

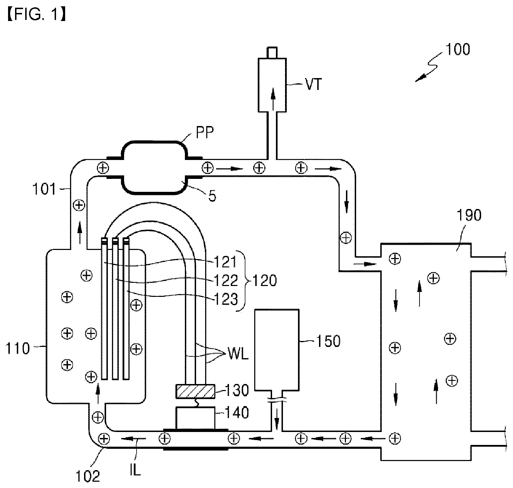

FIG. 1 is a schematic diagram illustrating an electrode boiler system according to an embodiment of present disclosure.

Referring to FIG. 1, an electrode boiler system 100 of the present embodiment may include a body portion 110, an electrode portion 120, a first flow path portion 101, a second flow path portion 102, and a receiving portion 190.

The body portion 110 may be formed to receive the electrode portion 120. Also, the body portion 110 may be formed to receive the electrolyzed water IL.

The electrolyzed water IL may be of various types. For example, electrolyzed water IL may include electrolyte solution, specifically distilled water, filtered water, bottled water, tap water, etc., in which at least one of various types of electrolyte solutions is appropriately diluted.

An electrolyte material contained in electrolyzed water IL may be of various types, and may include rust inhibitor mainly composed of edible soda, nitrite, silicate, inorganic substance of polyphosphate, amines, and oxy acids, etc.

The body portion 110 may have various shapes, is formed to accommodate the electrode portion 120, and as an optional embodiment, an end of the electrode portion 120 may be formed to be spaced apart from a surface of the body portion 110.

The electrolyzed water IL in the body portion 110 may be heated by Joule's heat by controlling the current applied through the electrode portion 120, and the electrolyzed water IL heated in the body portion 110 may be a primary heat source.

The body portion 110 may include various materials. For example, the body portion 110 may include a durable material, specifically a metal.

The body portion 110 includes an insulating material.

The body portion 110 includes Teflon resin, which is a fluorine resin.

From among the surfaces of the body portion 110, at least an inner surface of the body portion 110 adjacent to the electrolyzed water IL includes a Teflon resin layer. This Teflon resin layer is an insulating Teflon layer.

In addition, as an optional embodiment, from among the surfaces of the body portion 110, the inner surface of the body portion 110 adjacent to the electrolyzed water IL may include an anti-static Teflon resin layer.

The body portion 110 may have various shapes, and may have a shape similar to a pillar with an empty inside.

The electrode portion 120 may be disposed to contact the electrolyzed water IL in the body portion 110. The electrode portion 120 may include a plurality of electrodes 121, 122, and 123.

For example, the electrode portion 120 may be formed in a three-phase shape including three electrodes 121, 122, 123 arranged in a shape similar to a triangle, specifically an equilateral triangle.

Although not illustrated, as another optional embodiment, the electrode portion 120 may be formed in a two-phase shape including two electrodes.

In each of the electrodes 121, 122, 123, a region of the electrodes 121, 122, 123 may be connected to a conductive portion WL so that current is applied. The conductive portion WL may be an electric wire.

In addition, the conductive portion WL may be disposed in a region outside the body portion 110 so as not to contact with the electrolyzed water IL, and may be connected to each of the electrodes 121, 122, 123 outside the body portion 110.

The first flow path portion 101 may be formed to be connected to the body portion 110. The first flow path portion 101 may be connected to the body portion 110 so that the electrolyzed water IL may come out of the body portion 110.

The electrolyzed water IL come out of the body portion 110, for example, the electrolyzed water IL heated by the current applied to the electrode portion 120 may be delivered to the receiving portion 190 through the first flow path portion 101.

As an optional embodiment, the first flow path portion 101 may be connected to an upper portion of the body portion 110, wherein the "upper portion" may be a portion of the body portion 110 that is far from a ground. Through this, the heated electrolyzed water IL in the body portion 110 may easily flow out to the first flow path portion 101.

As an optional embodiment, a pump portion PP connected to the first flow path portion 101 may be disposed.

The pump portion PP may apply pressure so that the heated electrolyzed water IL in the body portion 110 is easily delivered to the receiving portion 190 through the first flow path portion 101. Further, through the control of the pump portion PP, the flow amount and flow rate of the electrolyzed water IL, which is heated in the body portion 110 and delivered to the receiving portion 190 through the first flow path portion 101, may be controllable.

As an optional embodiment, a vent portion VT may be connected to the first flow path portion 101.

The vent portion VT may be formed such that, while the heated electrolyzed water IL in the body portion 110 is delivered to the receiving portion 190 through the first flow path portion 101, vapor generated due to the temperature of the electrolyzed water IL that is continuously heated is discharged, and when needed, air is additionally introduced.

As an optional embodiment, the vent portion VT may include a valve or the like to discharge vapor from the first flow path portion 101 when needed.

As an optional embodiment, the vent portion VT may be disposed between the pump portion PP and the receiving portion 190.

The first flow path portion 101 may include various materials. For example, the first flow path portion 101 may include a material having durability and heat resistance, specifically metal, so as to withstand a rapid flow and heating of the electrolyzed water IL.

The first flow path portion 101 includes an insulating material.

The first flow path portion 101includes Teflon resin, which is a fluorine resin.

From among surfaces of the first flow path portion 101, at least an inner surface of the first flow path portion 101 adjacent to the electrolyzed water IL includes a Teflon resin layer. This Teflon resin layer is an insulating Teflon layer.

In addition, as an optional embodiment, from among surfaces of the first flow path portion 101, the inner surface of the first flow path portion 101 adjacent to the electrolyzed water IL may include an anti-static Teflon resin layer.

In addition, as an optional embodiment, from among regions of the first flow path portion 101, a region of the first flow path portion 101 connected to the pump portion PP and the vent portion VT may have an inner surface including an anti-static Teflon resin layer.

The second flow path portion 102 may be formed to be connected to the body portion 110. The second flow path portion 102 may be connected to the body portion 110 so that the electrolyzed water IL flows into the body portion 110.

The electrolyzed water IL come out of the body portion 110, for example, the electrolyzed water IL heated by the current applied to the electrode portion 120 may be delivered to the receiving portion 190 through the first flow path portion 101.

The electrolyzed water IL which has been received by the receiving portion 190 may be an electrolyzed water of which temperature is lowered, that is, a cool electrolyzed water, and the electrolyzed water IL which is cool may be introduced into the body portion 110 through the second flow path portion 102.

In addition, the electrolyzed water IL introduced into the body portion through the second flow path portion 102 may be heated by the current by the electrode portion 120 and flow out to the receiving portion 190 through the first flow path portion 101 again.

As an optional embodiment, the second flow path portion 102 may be connected to a lower portion of the body portion 110, and the "lower portion" may be a portion closer to the ground than the upper portion of the body portion 110 to which the first flow path portion 101 is connected.

As an optional embodiment, a supplementary portion 150 connected to the second flow path portion 102 may be disposed.

The supplementary portion 150 may be connected to the second flow path portion 102 to supply electrolyzed water IL to the second flow path portion 102.

As an optional embodiment, the supplementary portion 150 may be connected to a separately provided supply portion not illustrated to receive the electrolyzed water IL from the supply portion.

The supplementary portion 150 may be connected to the second flow path portion 102 so that the electrolyzed water IL joins with the electrolyzed water IL having a lower temperature than the electrolyzed water IL flowing in the first flow path portion 101. Through this, overflow or abnormal vapor pressure increase in the first flow path portion 101 due to the rapid replenish of the heated electrolyzed water IL may be reduced or prevented.

The second flow path portion 102 may include various materials. For example, the second flow path portion 102 may include a material having durability and heat resistance, specifically metal, so as to withstand rapid flow and heating of electrolyzed water IL.

The second flow path portion 102 includes an insulating material.

The second flow path portion 102 includes Teflon resin, which is a fluorine resin.

From among surfaces of the second flow path portion 102, at least an inner surface of the second flow path portion 102 adjacent to the electrolyzed water IL includes a Teflon resin layer. This Teflon resin layer is an insulating Teflon layer.

In addition, as an optional embodiment, from among surfaces of the second flow path portion 102, the inner surface of the second flow path portion 102 adjacent to the electrolyzed water IL may include an anti-static Teflon resin layer.

In addition, as an optional embodiment, an inner surface of a region connected to the supplementary portion 150 of the second flow path portion 102 may include an anti-static Teflon resin layer.

The receiving portion 190 may receive the electrolyzed water IL heated by the electrode portion 120 in the body portion 110 and delivered through the first flow path portion 101.

The electrolyzed water IL delivered to the receiving portion 190, for example heated electrolyzed water IL, may be used for a variety of applications.

The heated electrolyzed water IL may be directly supplied where hot water is needed. To this end, as an optional embodiment, the heated electrolyzed water IL in the receiving portion 190 may be transferred to a separate tank not illustrated.

In addition, as an optional embodiment, the heated electrolyzed water IL in the receiving portion 190 may be used as a supply of a heat source. For example, the heated electrolyzed water IL may be used to heat water (for example, cold water) in a space adjacent to the receiving portion 190 to change the water into hot water.

The receiving portion 190 may include various materials. For example, the receiving portion 190 may include a material having durability and heat resistance, specifically metal, to withstand rapid flow and heating of electrolyzed water IL.

As an optional embodiment, the receiving portion 190 may include an insulating material. For example, resin or ceramic may be included.

As another example, the receiving portion 190 may include Teflon resin, which is a fluorine resin.

As an optional embodiment, from among the surfaces of the receiving portion 190, at least an inner surface of the receiving portion 190 adjacent to the electrolyzed water IL may include a Teflon resin layer. This Teflon resin layer may be an insulating Teflon layer.

In addition, as an optional embodiment, from among the surfaces of the receiving portion 190, the inner surface of the receiving portion 190 adjacent to the electrolyzed water IL may include an anti-static Teflon resin layer.

As an optional embodiment, the temperature sensing portion 140 may be connected to the second flow path portion 102 to measure a temperature of the electrolyzed water IL passing through the second flow path portion 102.

For example, the temperature sensing portion may be formed and disposed to measure the temperature of the electrolyzed water IL in the second flow path portion 102 in real time.

As an optional embodiment, the temperature sensing portion 140 is connected to the second flow path portion 102 and reduces or prevents temperature measurement accuracy reduction, performance degradation, and occurrence of malfunctions or defects due to the heated electrolyzed water IL flowing through the first flow path portion 101.

As an optional embodiment, a cooling portion not illustrated may be disposed adjacent to the temperature sensing portion 140 to prevent overheating of the temperature sensing portion 140.

The control portion 130 may be formed to control a current applied to the electrode portion 120.

As an optional embodiment, the control portion 130 may be connected to the conductive portion WL connected to the electrodes 121, 122, and 123 of the electrode portion 120.

Through this, the control portion 130 may control the current applied to the electrode portion 120 in real time.

At this time, the control portion 130 may check an amount of current applied to the electrode portion 120 and control the current to increase or decrease according to a set value.

As an optional embodiment, the control portion 130 may check the amount of current applied to the electrode portion 120 in real time and control the current to increase or decrease according to the set value, thereby reducing a rapid temperature change of the electrolyzed water IL.

In addition, as an optional embodiment, the control portion 130 may be connected to the temperature sensing portion 140, and may control the current applied to the electrode portion 120 by using the temperature measured by the temperature sensing portion 140. For example, when the temperature measured by the temperature sensing portion 140 exceeds a normal range, the current applied to the electrode portion 120 may be decreased than a normal range, and when the temperature measured by the temperature sensing portion 140 is less than the normal range, the current applied to the electrode portion 120 may be increased above the normal range.

In this case, the control portion 130 may have information on "decreased temperature" or "increased temperature" set higher or lower than the normal range as a preset value.

In addition, as another example, the control portion 130 may change the current according to the "increased width" and "decreased width" corresponding to a difference value obtained by comparing the normal range of the measured temperature, and the control portion 130 may have the information on a value of the current to be changed according to the preset "increased width" and "decreased width".

As an optional embodiment, the control portion 130 may be separated from the temperature sensing portion 140 and connected through communication.

As another example, the control portion 130 may be disposed to be connected to the temperature sensing portion 140, and specifically, the control portion 130 may be disposed on a surface of the temperature sensing portion 140.

In addition, as another example, the control portion 130 may be integrally formed with the temperature sensing portion 140.

The control portion 130 may have various types of easily changing current. For example, the control portion may include various types of switches, and may include a static relay such as a solid-state relay SSR for sensitive and rapid control.

As an optional embodiment, a cooling portion not illustrated may be disposed adjacent to the control portion 130 so that overheating of the control portion 130 is prevented.

The electrode boiler system of this embodiment may heat the electrolyzed water in the body portion by controlling the current applied to the electrode of the electrode portion. The heated electrolyzed water is delivered to the receiving portion through the first flow path portion, and the heated electrolyzed water may be used as the heat source to heat others directly or indirectly in the receiving portion.

In addition, a process in which the electrolyzed water flows from the receiving portion to the body portion, and the electrolyzed water is heated and delivered may be repeated.

Through this, hot water or heat may be easily supplied, current applied to the electrode portion may be easily controlled, and electrolyzed water may be stably heated.

In addition, the body portion receiving the electrolyzed water, the receiving portion receiving the electrolyzed water, the entire or inner surface of the first flow path portion, and the entire or inner surface of the second flow path portion are formed of insulating material, so the leakage of current is reduced or blocked when the electrolyzed water flows, resulting in implementation of a safe and efficient electrode boiler system.

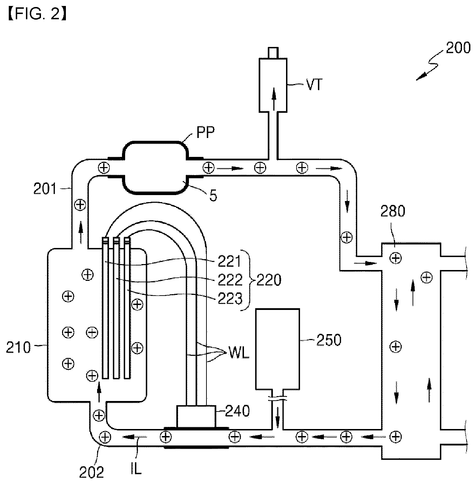

FIG. 2 is a schematic diagram illustrating an electrode boiler system according to other embodiment of present disclosure.

Referring to FIG. 2, an electrode boiler system 200 of the present embodiment may include a body portion 210, an electrode portion 220, a first flow path portion 201, a second flow path portion 202, and a heat exchange portion 280.

For convenience of explanation, the description will focus on differences from the above-described embodiment.

The body portion 210 may be formed to receive the electrode portion 220. Also, the body portion 210 may be formed to receive the electrolyzed water IL.

The electrolyzed water IL may be of various types. For example, electrolyzed water IL may include electrolyte solution, specifically distilled water, filtered water, bottled water, tap water, etc., in which at least one of various types of electrolyte solutions is appropriately diluted.

Details of the electrolyzed water IL are the same as or similar to those of the above-described embodiment, so a detailed description thereof will be omitted.

The body portion 210 may have various shapes, is formed to accommodate the electrode portion 220, and as an optional embodiment, an end of the electrode portion 220 may be formed to be spaced apart from a surface of the body portion 210.

The electrolyzed water IL in the body portion 210 may be heated by Joule's heat by controlling the current applied through the electrode portion 220, and the electrolyzed water IL heated in the body portion 210 may be a primary heat source.

The body portion 210 may include various materials. For example, the body portion 210 may include a durable material, specifically a metal.

The body portion 210 includes an insulating material.

The body portion 210 includes Teflon resin, which is a fluorine resin.

From among the surfaces of the body portion 210, at least an inner surface of the body portion 210 adjacent to the electrolyzed water IL includes a Teflon resin layer. This Teflon resin layer is an insulating Teflon layer.

In addition, as an optional embodiment, from among the surfaces of the body portion 210, the inner surface of the body portion 210 adjacent to the electrolyzed water IL may include an anti-static Teflon resin layer.

The electrode portion 220 may be disposed to contact the electrolyzed water IL in the body portion 210. The electrode portion 220 may include a plurality of electrodes 221, 222, and 223.

For example, the electrode portion 220 may be formed in a three-phase shape, and may include three electrodes 221, 222, and 223 which are arranged in a triangle, for example, an equilateral triangle.

Although not illustrated, as another optional embodiment, the electrode portion 220 may be formed in a two-phase shape including two electrodes.

In each of the electrodes 221, 222, and 223, a region of the electrodes 221, 222, and 223 may be connected to a conductive portion WL so that current is applied. The conductive portion WL may be an electric wire.

In addition, the conductive portion WL may be disposed in a region outside the body portion 210 so as not to contact with the electrolyzed water IL, and may be connected to each of the electrodes 221, 222, and 223 outside the body portion 210.

The first flow path portion 201 may be formed to be connected to the body portion 210. The first flow path portion 201 may be connected to the body portion 210 so that the electrolyzed water IL may come out of the body portion 210.

The electrolyzed water IL come out of the body portion 210, for example, the electrolyzed water IL heated by the current applied to the electrode portion 220 may be delivered to the heat exchange portion 280 through the first flow path portion 201.

As an optional embodiment, the first flow path portion 201 may be connected to an upper portion of the body portion 210, wherein the "upper portion" may be a portion of the body portion 210 that is far from a ground. Through this, the heated electrolyzed water IL in the body portion 210 may easily flow out to the first flow path portion 201.

As an optional embodiment, a pump portion PP connected to the first flow path portion 201 may be disposed.

The pump portion PP may apply pressure so that the heated electrolyzed water IL in the body portion 210 is easily delivered to the heat exchange portion 280 through the first flow path portion 201. Further, through the control of the pump portion PP, the flow amount and flow rate of the electrolyzed water IL, heated in the body portion 210, delivered to the heat exchange portion 280 through the first flow path portion 201 may be controllable.

As an optional embodiment, a vent portion VT may be connected to the first flow path portion 201.

The vent portion VT may be formed such that, while the heated electrolyzed water IL in the body portion 210 is delivered to the heat exchange portion 280 through the first flow path portion 201, vapor generated due to the temperature of the electrolyzed water IL that is continuously heated is discharged, and when needed, air is additionally introduced.

As an optional embodiment, the vent portion VT may include a valve or the like and thus, optionally, when needed, the discharge of vapor from the first flow path portion 201 may be controllable.

As an optional embodiment, the vent portion VT may be disposed between the pump portion PP and the heat exchange portion 280. Through this, an excessive flow of electrolyzed water IL in the first flow path portion 201 to the heat exchange portion 280 through an abnormal pump portion that may occur during the operation of the pump portion PP, and a pressure increase due to boiling, may be easily controlled.

The first flow path portion 201 may include various materials. For example, the first flow path portion 201 may include a material having durability and heat resistance, specifically metal, so as to withstand a rapid flow and heating of the electrolyzed water IL.

The first flow path portion 201 includes an insulating material.

The first flow path portion 201 includes Teflon resin, which is a fluorine resin.

From among surfaces of the first flow path portion 201, at least an inner surface of the first flow path portion 201 adjacent to the electrolyzed water IL includes a Teflon resin layer. This Teflon resin layer is an insulating Teflon layer.

In addition, as an optional embodiment, from among surfaces of the first flow path portion 201, the inner surface of the first flow path portion 201 adjacent to the electrolyzed water IL may include an anti-static Teflon resin layer.

In addition, as an optional embodiment, inner surfaces of regions connected to the pump portion PP and the vent portion VT of the first flow path portion 201 may include an anti-static Teflon resin layer.

The second flow path portion 202 may be formed to be connected to the body portion 210. The second flow path portion 202 may be connected to the body portion 210 so that the electrolyzed water IL flows into the body portion 210.

The electrolyzed water IL come out of the body portion 210, for example, the electrolyzed water IL heated by the current applied to the electrode portion 220 may be delivered to the heat exchange portion 280 through the first flow path portion 201.

The electrolyzed water IL which has been received by the heat exchange portion 280 may be an electrolyzed water of which temperature is lowered, that is, a cool electrolyzed water, and the electrolyzed water IL which is cool may be introduced into the body portion 210 through the second flow path portion 202.

In addition, the electrolyzed water IL introduced into the body portion through the second flow path portion 202 may be heated by the current by the electrode portion 220 and flow out to the heat exchange portion 280 through the first flow path portion 201 again.

As an optional embodiment, the second flow path portion 202 may be connected to a lower portion of the body portion 210, and the "lower portion" may be a portion closer to the ground than the upper portion of the body portion 210 to which the first flow path portion 201 is connected.

As an optional embodiment, a supplementary portion 250 connected to the second flow path portion 202 may be disposed.

The supplementary portion 250 may be connected to the second flow path portion 202 to supply electrolyzed water IL to the second flow path portion 202.

As an optional embodiment, the supplementary portion 250 may be connected to a separately provided supply portion not illustrated to receive the electrolyzed water IL from the supply portion.

The supplementary portion 250 may be connected to the second flow path portion 202 so that the electrolyzed water IL joins with the electrolyzed water IL having a lower temperature than the electrolyzed water IL flowing in the first flow path portion 201. Through this, overflow or abnormal vapor pressure increase in the first flow path portion 201 due to the rapid replenish of the heated electrolyzed water IL may be reduced or prevented.

The second flow path portion 202 may include various materials. For example, the second flow path portion 202 may include a material having durability and heat resistance, specifically metal, so as to withstand rapid flow and heating of electrolyzed water IL.

The second flow path portion 202 includes an insulating material.

The second flow path portion 202 includes Teflon resin, which is a fluorine resin.

From among surfaces of the second flow path portion 202, at least an inner surface of the second flow path portion 202 adjacent to the electrolyzed water IL includes a Teflon resin layer. This Teflon resin layer is an insulating Teflon layer.

In addition, as an optional embodiment, from among surfaces of the second flow path portion 202, the inner surface of the second flow path portion 202 adjacent to the electrolyzed water IL may include an anti-static Teflon resin layer.

In addition, as an optional embodiment, an inner surface of a region connected to the supplementary portion 250 of the second flow path portion 202 may include an anti-static Teflon resin layer.

The heat exchange portion 280 may receive the electrolyzed water IL heated by the electrode portion 220 in the body portion 210 and delivered through the first flow path portion 201, and the electrolyzed water delivered to the heat exchange portion may be used to heat various types of intermediate materials, for example water.

Through this, the heated electrolyzed water IL delivered to the heat exchange portion 280 may be used a heat source to heat an intermediate material, for example water.

In addition, after being used as a heat source to heat the intermediate material, the electrolyzed water IL which has been heated in the heat exchange portion 280 may be cooled, and may move again to the body portion 210 through the second flow path portion 202 as described above.

As an optional embodiment, when the electrolyzed water IL is lost or evaporated, the electrolyzed water IL may be supplied to the second flow path portion 202 by controlling the supplementary portion 250.

The heat exchange portion 280 may include various materials. For example, the heat exchange portion 280 may include a material having durability and heat resistance, specifically metal, to withstand rapid flow and heating of electrolyzed water IL.

As an optional embodiment, the heat exchange portion 280 may include an insulating material. For example, resin or ceramic may be included.

As another example, the heat exchange portion 280 may include Teflon resin, which is a fluorine resin.

As an optional embodiment, from among the surfaces of the heat exchange portion 280, at least an inner surface of the heat exchange portion 280 adjacent to the electrolyzed water IL may include a Teflon resin layer. This Teflon resin layer may be an insulating Teflon layer.

In addition, as an optional embodiment, from among the surfaces of the heat exchange portion 280, the inner surface of the heat exchange portion 280 adjacent to the electrolyzed water IL may include an anti-static Teflon resin layer.

As an optional embodiment, the temperature sensing portion 240 may be connected to the second flow path portion 202 to measure a temperature of the electrolyzed water IL passing through the second flow path portion 202.

For example, the temperature sensing portion may be formed and disposed to measure the temperature of the electrolyzed water IL in the second flow path portion 202 in real time.

As an optional embodiment, the temperature sensing portion 240 is connected to the second flow path portion 202 and reduces or prevents temperature measurement accuracy reduction, performance degradation, and occurrence of malfunctions or defects due to the heated electrolyzed water IL flowing through the first flow path portion 201.

As an optional embodiment, a cooling portion not illustrated may be disposed adjacent to the temperature sensing portion 240 to prevent overheating of the temperature sensing portion 240.

The control portion 230 may be formed to control a current applied to the electrode portion 220.

As an optional embodiment, the control portion 230 may be connected to the conductive portion WL connected to the electrodes 221, 222, and 223 of the electrode portion 220.

Through this, the control portion 230 may control the current applied to the electrode portion 220 in real time.

At this time, the control portion 230 may check an amount of current applied to the electrode portion 220 and control the current to increase or decrease according to a set value.

As an optional embodiment, the control portion 230 may check the amount of current applied to the electrode portion 220 in real time and control the current to increase or decrease according to the set value, thereby reducing a rapid temperature change of the electrolyzed water IL.

In addition, as an optional embodiment, the control portion 230 may be connected to the temperature sensing portion 240, and may control the current applied to the electrode portion 220 by using the temperature measured by the temperature sensing portion 240. For example, when the temperature measured by the temperature sensing portion 240 exceeds a normal range, the current applied to the electrode portion 220 may be decreased below a normal range, and when the temperature measured by the temperature sensing portion 240 is less than the normal range, the current applied to the electrode portion 220 may be increased above the normal range.

In this case, the control portion 230 may have information on "decreased temperature" or "increased temperature" set higher or lower than the normal range as a preset value.

In addition, as another example, the control portion 230 may change the current according to the "increased width" and "decreased width" corresponding to a difference value obtained by comparing the normal range of the measured temperature, and the control portion 230 may have the information on a value of the current to be changed according to the preset "increased width" and "decreased width".

As an optional embodiment, the control portion 230 may be separated from the temperature sensing portion 240 and connected through communication.

As another example, the control portion 230 may be disposed to be connected to the temperature sensing portion 240, and specifically, the control portion 230 may be disposed on a surface of the temperature sensing portion 240.

In addition, as another example, the control portion 230 may be integrally formed with the temperature sensing portion 240.

The control portion 230 may have various types of easily changing current. For example, the control portion may include various types of switches, and may include a static relay such as a solid-state relay SSR for sensitive and rapid control.

As an optional embodiment, a cooling portion not illustrated may be disposed adjacent to the control portion 230 so that overheating of the control portion 230 is prevented.

The electrode boiler system of this embodiment may heat the electrolyzed water in the body portion by controlling the current applied to the electrode of the electrode portion. The heated electrolyzed water is delivered to the heat exchange portion through the first flow path portion, and the heated electrolyzed water may be used as the heat source.

In addition, a process in which the electrolyzed water flows from the heat exchange portion to the body portion, and the electrolyzed water is heated and delivered may be repeated.

Through this, hot water or heat may be easily supplied, current applied to the electrode portion may be easily controlled, and electrolyzed water may be stably heated.

In addition, the body portion receiving the electrolyzed water, the heat exchange portion receiving the electrolyzed water, the entire or inner surface of the first flow path portion, and the entire or inner surface of the second flow path portion are formed of insulating material, so the leakage of current is reduced or blocked when the electrolyzed water flows, resulting in implementation of a safe and efficient electrode boiler system.

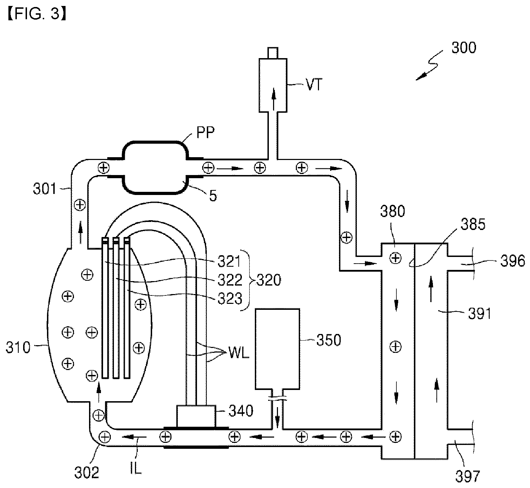

FIG. 3 is a schematic diagram illustrating an electrode boiler system according to another embodiment of present disclosure.

Referring to FIG. 3, an electrode boiler system 300 of the present embodiment may include a body portion 310, an electrode portion 320, a first flow path portion 301, a second flow path portion 302, and a heat exchange portion 380.

For convenience of explanation, the description will focus on differences from the above-described embodiment.

The body portion 310 may be formed to receive the electrode portion 320. Also, the body portion 310 may be formed to receive the electrolyzed water IL.

The electrolyzed water IL may be of various types. For example, electrolyzed water IL may include electrolyte solution, specifically distilled water, filtered water, bottled water, tap water, etc., in which at least one of various types of electrolyte solutions is appropriately diluted.

Details of the electrolyzed water IL are the same as or similar to those of the above-described embodiment, so a detailed description thereof will be omitted.

The body portion 310 may have various shapes, is formed to accommodate the electrode portion 320, and as an optional embodiment, an end of the electrode portion 320 may be formed to be spaced apart from a surface of the body portion 310.

The electrolyzed water IL in the body portion 310 may be heated by Joule's heat by controlling the current applied through the electrode portion 320, and the electrolyzed water IL heated in the body portion 310 may be a primary heat source.

The body portion 310 may include various materials. For example, the body portion 310 may include a durable material, specifically a metal.

The body portion 310 includes an insulating material.

The body portion 310 includes Teflon resin, which is a fluorine resin.

From among the surfaces of the body portion 310, at least an inner surface of the body portion 310 adjacent to the electrolyzed water IL includes a Teflon resin layer. This Teflon resin layer is an insulating Teflon layer.

In addition, as an optional embodiment, from among the surfaces of the body portion 310, the inner surface of the body portion 310 adjacent to the electrolyzed water IL may include an anti-static Teflon resin layer.

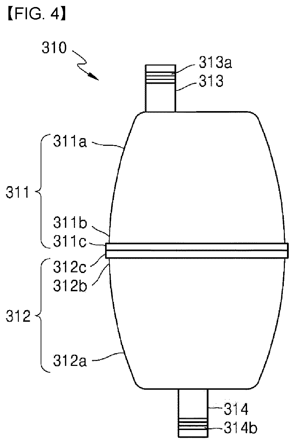

FIG. 4 is a diagram illustrating an optional embodiment of a body portion of the electrode boiler system of FIG. 3.

Referring to FIG. 4, the body portion 310 may include a first body member 311 and a second body member 312.

A first connection portion 313 connected to the first flow path portion 301 may be formed at one end of the first body member 311, and a second connection portion 314 connected to the second flow path portion 302 may be formed at one end of the second body member 312.

As an optional embodiment, to reduce or prevent leakage through a stable coupling with the first flow path portion 301, the first connection portion 313 may include a locking portion 313a, and the locking portion 313a may include at least one uneven portion or at least one threaded surface.

As an optional embodiment, to reduce or prevent leakage through a stable coupling with the second flow path portion 302, the second connection portion 314 may include a locking portion 314b, and the locking portion 314b may include at least one uneven portion or at least one threaded surface.

The first body member 311 may include a first connection region 311a close to the first connection portion 313 and a first central region 311b close to the second body member 312.

As an optional embodiment, the first central region 311b may have a larger width than the first connection region 311a.

The second body member 312 may include a second connection region 312a close to the second connection portion 314 and a second central region 312b close to the first body member 311.

As an optional embodiment, the second central region 312b may have a larger width than the second connection region 312a.

Since the widths of the first central region 311b and the second central region 312b are larger than the widths of the first connection region 311a and the second connection region 312a, the electrode portion 320 may stably contact the electrolyzed water IL.

In addition, the electrolyzed water may be quickly discharged to the first flow path portion 301, and may be quickly introduced from the second flow path portion 302.

As an optional embodiment, a first coupling region 311c adjacent to the first central region 311b and a second coupling region 312c adjacent to the second central region 312b are formed, and the first coupling region 311c may be coupled with the second coupling region 312c.

In this case, for example, the first coupling region 311c and the second coupling region 312c may have a larger width than the first central region 311b and the second central region 312b so as to protrude from the first central region 311b and the second central region 312b.

Through this, the first body member 311 and the second body member 312 are separately prepared and coupled, so that the body portion 310 may be easily formed, and a margin of the coupling region is increased, so that the first body member 311 and the second body member 312 of the body portion 310 may be easily coupled.

The electrode portion 320 may be disposed to contact the electrolyzed water IL in the body portion 310. The electrode portion 320 may include a plurality of electrodes 321, 322, 323.

For example, the electrode portion 320 may be formed in a three-phase shape including three electrodes 321, 322, 323 arranged in a shape similar to a triangle, specifically an equilateral triangle.

Although not illustrated, as another optional embodiment, the electrode portion 320 may be formed in a two-phase shape including two electrodes.

In each of the electrodes 321, 322, 323, a region of the electrodes 321, 322, 323 may be connected to a conductive portion WL so that current is applied. The conductive portion WL may be an electric wire.

In addition, the conductive portion WL may be disposed in a region outside the body portion 310 so as not to contact with the electrolyzed water IL, and may be connected to each of the electrodes 321, 322, 323 outside the body portion 310.

The first flow path portion 301 may be formed to be connected to the body portion 310. The first flow path portion 301 may be connected to the body portion 310 so that the electrolyzed water IL may come out of the body portion 310.

The electrolyzed water IL come out of the body portion 310, for example, the electrolyzed water IL heated by the current applied to the electrode portion 320 may be delivered to the heat exchange portion 380 through the first flow path portion 301.

As an optional embodiment, the first flow path portion 301 may be connected to an upper portion of the body portion 310, wherein the "upper portion" may be a portion of the body portion 310 that is far from a ground. Through this, the heated electrolyzed water IL in the body portion 310 may easily flow out to the first flow path portion 301.

As an optional embodiment, a pump portion PP connected to the first flow path portion 301 may be disposed.

The pump portion PP may apply pressure so that the heated electrolyzed water IL in the body portion 310 is easily delivered to the heat exchange portion 380 through the first flow path portion 301. Further, through the control of the pump portion PP, the flow amount and flow rate of the electrolyzed water IL, heated in the body portion 310, delivered to the heat exchange portion 380 through the first flow path portion 301 may be controllable.

As an optional embodiment, a vent portion VT may be connected to the first flow path portion 301.

The vent portion VT may be formed such that, while the heated electrolyzed water IL in the body portion 310 is delivered to the heat exchange portion 380 through the first flow path portion 301, vapor generated due to the temperature of the electrolyzed water IL that is continuously heated is discharged, and when needed, air is additionally introduced.

As an optional embodiment, the vent portion VT may include a valve or the like and thus, optionally, when needed, the discharge of vapor from the first flow path portion 301 may be controllable.

As an optional embodiment, the vent portion VT may be disposed between the pump portion PP and the heat exchange portion 380. Through this, an excessive flow of electrolyzed water IL in the first flow path portion 301 to the heat exchange portion 380 through an abnormal pump portion that may occur during the operation of the pump portion PP, and a pressure increase due to boiling, may be easily controlled.

The first flow path portion 301 may include various materials. For example, the first flow path portion 301 may include a material having durability and heat resistance, specifically metal, so as to withstand a rapid flow and heating of the electrolyzed water IL.

The first flow path portion 301 includes an insulating material.

The first flow path portion 301 includes Teflon resin, which is a fluorine resin.

From among surfaces of the first flow path portion 301, at least an inner surface of the first flow path portion 301 adjacent to the electrolyzed water IL includes a Teflon resin layer. This Teflon resin layer is an insulating Teflon layer.

In addition, as an optional embodiment, from among surfaces of the first flow path portion 301, the inner surface of the first flow path portion 301 adjacent to the electrolyzed water IL may include an anti-static Teflon resin layer.

In addition, as an optional embodiment, inner surfaces of regions connected to the pump portion PP and the vent portion VT of the first flow path portion 301 may include an anti-static Teflon resin layer.

The second flow path portion 302 may be connected to the body portion 310. The second flow path portion 302 may be connected to the body portion 310 so that the electrolyzed water IL flows into the body portion 310.

The electrolyzed water IL come out of the body portion 310, for example, the electrolyzed water IL heated by the current applied to the electrode portion 320 may be delivered to the heat exchange portion 380 through the first flow path portion 301.

The electrolyzed water IL which has been received by the heat exchange portion 380 may be an electrolyzed water of which temperature is lowered, that is, a cool electrolyzed water, and the electrolyzed water IL which is cool may be introduced into the body portion 310 through the second flow path portion 302.

In addition, the electrolyzed water IL introduced into the body portion through the second flow path portion 302 may be heated by the current by the electrode portion 320 and flow out to the heat exchange portion 380 through the first flow path portion 301 again.

As an optional embodiment, the second flow path portion 302 may be connected to a lower portion of the body portion 310, and the "lower portion" may be a portion closer to the ground than the upper portion of the body portion 310 to which the first flow path portion 301 is connected.

As an optional embodiment, a supplementary portion 350 connected to the second flow path portion 302 may be disposed.

The supplementary portion 350 may be connected to the second flow path portion 302 to supply electrolyzed water IL to the second flow path portion 302.

As an optional embodiment, the supplementary portion 350 may be connected to a separately provided supply portion not illustrated to receive the electrolyzed water IL from the supply portion.

The supplementary portion 350 may be connected to the second flow path portion 302 so that the electrolyzed water IL joins with the electrolyzed water IL having a lower temperature than the electrolyzed water IL flowing in the first flow path portion 301. Through this, overflow or abnormal vapor pressure increase in the first flow path portion 301 due to the rapid replenish of the heated electrolyzed water IL may be reduced or prevented.

The second flow path portion 302 may include various materials. For example, the second flow path portion 302 may include a material having durability and heat resistance, specifically metal, so as to withstand rapid flow and heating of electrolyzed water IL.

The second flow path portion 302 includes an insulating material.

The second flow path portion 302 includes Teflon resin, which is a fluorine resin.

From among surfaces of the second flow path portion 302, at least an inner surface of the second flow path portion 302 adjacent to the electrolyzed water IL includes a Teflon resin layer. This Teflon resin layer is an insulating Teflon layer.

In addition, as an optional embodiment, from among surfaces of the second flow path portion 302, the inner surface of the second flow path portion 302 adjacent to the electrolyzed water IL may include an anti-static Teflon resin layer.

In addition, as an optional embodiment, an inner surface of a region connected to the supplementary portion 350 of the second flow path portion 302 may include an anti-static Teflon resin layer.

The heat exchange portion 380 may receive the electrolyzed water IL heated by the electrode portion 320 in the body portion 310 and delivered through the first flow path portion 301, and the electrolyzed water delivered to the heat exchange portion may be used to heat various types of intermediate materials, for example water.

Through this, the heated electrolyzed water IL delivered to the heat exchange portion 380 may be used a heat source to heat an intermediate material, for example water.

In this embodiment, specifically, the heat exchange portion 380 may be connected to the heat receiving portion 391 to transmit heat to the heat receiving portion 391.

As an optional embodiment, the heat exchange portion 380 and the heat receiving portion 391 may be disposed to be in contact with each other with a boundary wall 385 therebetween, and heat may be transferred easily from the heated electrolyzed water IL in the heat exchange portion 380 to the heat receiving portion 391.

For example, a fluid such as water may be accommodated in the heat receiving portion 391, and low or room temperature water introduced through an inlet 396 may be heated by receiving heat from the heat exchange portion 380, and may be discharged through an outlet 397.

As another example, gas may be accommodated in the heat receiving portion 391.

In addition, when cooled by transferring the heat of the heated electrolyzed water IL in the heat exchange portion 380 to the heat receiving portion 391, the electrolyzed water IL may move again to the body portion 310 through the second flow path portion 302 as described above.

As an optional embodiment, when the electrolyzed water IL is lost or evaporated, the electrolyzed water IL may be supplied to the second flow path portion 302 by controlling the supplementary portion 350.

The heat exchange portion 380 may include various materials. For example, the heat exchange portion 380 may include a material having durability and heat resistance, specifically metal, to withstand rapid flow and heating of electrolyzed water IL.

As an optional embodiment, the heat exchange portion 380 may include an insulating material. For example, resin or ceramic may be included.

As another example, the heat exchange portion 380 may include Teflon resin, which is a fluorine resin.

As an optional embodiment, from among the surfaces of the heat exchange portion 380, at least an inner surface of the heat exchange portion 380 adjacent to the electrolyzed water IL may include a Teflon resin layer. This Teflon resin layer may be an insulating Teflon layer.

In addition, as an optional embodiment, from among the surfaces of the heat exchange portion 380, the inner surface of the heat exchange portion 380 adjacent to the electrolyzed water IL may include an anti-static Teflon resin layer.

As an optional embodiment, from among surfaces of the boundary wall 385, a surface of the boundary wall 385 facing the heat exchange portion 380 may include an insulating material. For example, resin or ceramic may be included. As another example, from among surfaces of the boundary wall 385, a surface of the boundary wall 385 facing the heat exchange portion 380 may include a Teflon resin, which is a fluorine resin.

As an optional embodiment, from among surfaces of the boundary wall 385, at least a surface of the boundary wall 385 facing the heat exchange portion 380 may include an insulating material. This Teflon resin layer may be an insulating Teflon layer.

As an optional embodiment, from among surfaces of the boundary wall 385, a surface of the boundary wall 385 facing the heat exchange portion 380 may include an anti-static Teflon resin layer.

As an optional embodiment, the temperature sensing portion 340 may be connected to the second flow path portion 302 to measure a temperature of the electrolyzed water IL passing through the second flow path portion 302.

For example, the temperature sensing portion may be formed and disposed to measure the temperature of the electrolyzed water IL in the second flow path portion 302 in real time.

As an optional embodiment, the temperature sensing portion 340 is connected to the second flow path portion 302 and reduces or prevents temperature measurement accuracy reduction, performance degradation, and occurrence of malfunctions or defects due to the heated electrolyzed water IL flowing through the first flow path portion 301.

As an optional embodiment, a cooling portion not illustrated may be disposed adjacent to the temperature sensing portion 340 to prevent overheating of the temperature sensing portion 340.

A control portion 330 may be formed to control a current applied to the electrode portion 320.

As an optional embodiment, the control portion 330 may be connected to the conductive portion WL connected to the electrodes 321, 322, 323 of the electrode portion 320.

Through this, the control portion 330 may control the current applied to the electrode portion 320 in real time.

At this time, the control portion 330 may check an amount of current applied to the electrode portion 320 and control the current to increase or decrease according to a set value.

As an optional embodiment, the control portion 330 may check the amount of current applied to the electrode portion 320 in real time and control the current to increase or decrease according to the set value, thereby reducing a rapid temperature change of the electrolyzed water IL.

In addition, as an optional embodiment, the control portion 330 may be connected to the temperature sensing portion 340, and may control the current applied to the electrode portion 320 by using the temperature measured by the temperature sensing portion 340. For example, when the temperature measured by the temperature sensing portion 340 exceeds a normal range, the current applied to the electrode portion 320 may be decreased below a normal range, and when the temperature measured by the temperature sensing portion 340 is less than the normal range, the current applied to the electrode portion 320 may be increased above the normal range.

In this case, the control portion 330 may have information on "decreased temperature" or "increased temperature" set higher or lower than the normal range as a preset value.

In addition, as another example, the control portion 330 may change the current according to the "increased width" and "decreased width" corresponding to a difference value obtained by comparing the normal range of the measured temperature, and the control portion 330 may have the information on a value of the current to be changed according to the preset "increased width" and "decreased width".

As an optional embodiment, the control portion 330 may be separated from the temperature sensing portion 340 and connected through communication.

As another example, the control portion 330 may be disposed to be connected to the temperature sensing portion 340, and specifically, the control portion 330 may be disposed on a surface of the temperature sensing portion 340.

In addition, as another example, the control portion 330 may be integrally formed with the temperature sensing portion 340.

The control portion 330 may have various types of easily changing current. For example, the control portion may include various types of switches, and may include a static relay such as a solid-state relay SSR for sensitive and rapid control.

As an optional embodiment, a cooling portion not illustrated may be disposed adjacent to the control portion 330 so that overheating of the control portion 330 is prevented.

The electrode boiler system of this embodiment may heat the electrolyzed water in the body portion by controlling the current applied to the electrode of the electrode portion. The heated electrolyzed water is delivered to the heat exchange portion through the first flow path portion, and the heated electrolyzed water may be provided to the heat exchange portion and used as the heat source, and may provide heat to the heat receiving portion adjacent to the heat receiving portion.

In addition, a process in which the electrolyzed water flows from the heat exchange portion to the body portion, and the electrolyzed water is heated and delivered may be repeated.

Through this, hot water or heat may be easily supplied, current applied to the electrode portion may be easily controlled, and electrolyzed water may be stably heated.

In addition, the body portion receiving the electrolyzed water, the heat exchange portion receiving the electrolyzed water, the entire or inner surface of the first flow path portion, and the entire or inner surface of the second flow path portion are formed of insulating material, so the leakage of current is reduced or blocked when the electrolyzed water flows, resulting in implementation of a safe and efficient electrode boiler system.

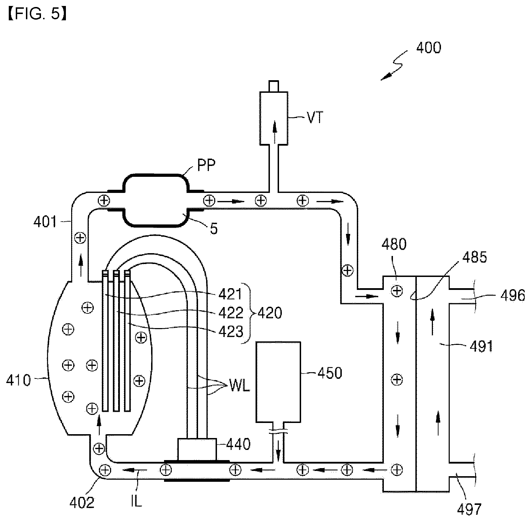

FIG. 5 is a schematic diagram illustrating an electrode boiler system according to another embodiment of present disclosure.

Referring to FIG. 5, an electrode boiler system 400 of the present embodiment may include a body portion 410, an electrode portion 420, a first flow path portion 401, a second flow path portion 402, and a heat exchange portion 480.

For convenience of explanation, the description will focus on differences from the above-described embodiment.

The body portion 410 may be formed to receive the electrode portion 420. Also, the body portion 410 may be formed to receive the electrolyzed water IL.

The electrolyzed water IL may be of various types. For example, electrolyzed water IL may include electrolyte solution, specifically distilled water, filtered water, bottled water, tap water, etc., in which at least one of various types of electrolyte solutions is appropriately diluted.

Details of the electrolyzed water IL are the same as or similar to those of the above-described embodiment, so a detailed description thereof will be omitted.

The body portion 410 may have various shapes, is formed to accommodate the electrode portion 420, and as an optional embodiment, an end of the electrode portion 420 may be formed to be spaced apart from a surface of the body portion 410.

The electrolyzed water IL in the body portion 410 may be heated by Joule's heat by controlling the current applied through the electrode portion 420, and the electrolyzed water IL heated in the body portion 410 may be a primary heat source.

The body portion 410 may include various materials. For example, the body portion 410 may include a durable material, specifically a metal.

The body portion 410 includes an insulating material.

The body portion 410 includes Teflon resin, which is a fluorine resin.

From among the surfaces of the body portion 410, at least an inner surface of the body portion 410 adjacent to the electrolyzed water IL includes a Teflon resin layer. This Teflon resin layer is an insulating Teflon layer.

In addition, as an optional embodiment, from among the surfaces of the body portion 410, the inner surface of the body portion 410 adjacent to the electrolyzed water IL may include an anti-static Teflon resin layer.

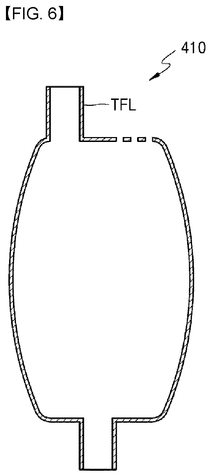

FIG. 6 is a diagram illustrating an optional embodiment of a body portion of the electrode boiler system of FIG. 5.

Referring to FIG. 6, the body portion 410 includes a Teflon resin layer TFL. The Teflon resin layer TFL is an insulating Teflon layer.

In addition, as an optional embodiment, the Teflon resin layer TFL may include an anti-static Teflon resin layer.

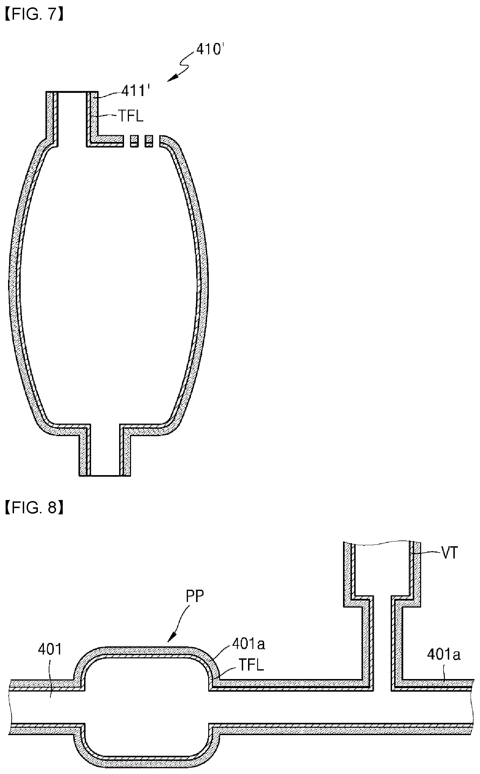

FIG. 7 is a diagram illustrating a modified embodiment of a body portion of the electrode boiler system of FIG. 5.

Referring to FIG. 7, the body portion 410 ' of the present embodiment may include an inner layer TFL and an outer layer 411 '.

The outer layer 411 ' may include a variety of materials, for example, may include a durable material such as metal.

As an optional embodiment, the outer layer 411 ' may include an insulating material. For example, resin or ceramic may be included.

The inner layer TFL includes insulating resin. In addition, the inner layer TFL includes an insulating Teflon layer.

In addition, as another example, the inner layer TFL may include an anti-static Teflon resin layer.

In this case, as an optional embodiment, the inner layer may be formed on the entire inner surface of the outer layer 411' of the body portion 410', and as another example, the inner layer may be formed only on an inner surface adjacent to the electrolyzed water IL of the outer layer.

Although not illustrated, the structure of FIG. 4 described above may be selectively applied.

The electrode portion 420 may be disposed to contact the electrolyzed water IL in the body portion 410. The electrode portion 420 may include a plurality of electrodes 421, 422, 423.

For example, the electrode portion 420 may be formed in a three-phase shape including three electrodes 421, 422, 423 arranged in a shape similar to a triangle, specifically an equilateral triangle.

Although not illustrated, as another optional embodiment, the electrode portion 420 may be formed in a two-phase shape including two electrodes.

In each of the electrodes 421, 422, 423, a region of the electrodes 421, 422, 423 may be connected to a conductive portion WL so that current is applied. The conductive portion WL may be an electric wire.

In addition, the conductive portion WL may be disposed in a region outside the body portion 410 so as not to contact with the electrolyzed water IL, and may be connected to each of the electrodes 421, 422, 423 outside the body portion 410.

The first flow path portion 401 may be formed to be connected to the body portion 410. The first flow path portion 401 may be connected to the body portion 410 so that the electrolyzed water IL may come out of the body portion 410.

The electrolyzed water IL come out of the body portion 410, for example, the electrolyzed water IL heated by the current applied to the electrode portion 420 may be delivered to the heat exchange portion 480 through the first flow path portion 401.

As an optional embodiment, the first flow path portion 401 may be connected to an upper portion of the body portion 410, wherein the "upper portion" may be a portion of the body portion 410 that is far from a ground. Through this, the heated electrolyzed water IL in the body portion 410 may easily flow out to the first flow path portion 401.

As an optional embodiment, a pump portion PP connected to the first flow path portion 401 may be disposed.

The pump portion PP may apply pressure so that the heated electrolyzed water IL in the body portion 410 is easily delivered to the heat exchange portion 480 through the first flow path portion 401. Further, through the control of the pump portion PP, the flow amount and flow rate of the electrolyzed water IL, heated in the body portion 410, delivered to the heat exchange portion 480 through the first flow path portion 401 may be controllable.

As an optional embodiment, a vent portion VT may be connected to the first flow path portion 401.

The vent portion VT may be formed such that, while the heated electrolyzed water IL in the body portion 410 is delivered to the heat exchange portion 480 through the first flow path portion 401, vapor generated due to the temperature of the electrolyzed water IL that is continuously heated is discharged, and when needed, air is additionally introduced.

As an optional embodiment, the vent portion VT may include a valve or the like and thus, optionally, when needed, the discharge of vapor from the first flow path portion 401 may be controllable.

As an optional embodiment, the vent portion VT may be disposed between the pump portion PP and the heat exchange portion 480. Through this, an excessive flow of electrolyzed water IL in the first flow path portion 401 to the heat exchange portion 480 through an abnormal pump portion that may occur during the operation of the pump portion PP, and a pressure increase due to boiling, may be easily controlled.

The first flow path portion 401 may include various materials. For example, the first flow path portion 401 may include a material having durability and heat resistance, specifically metal, so as to withstand a rapid flow and heating of the electrolyzed water IL.

The first flow path portion 401 includes an insulating material.

The first flow path portion 401 includes Teflon resin, which is a fluorine resin.

From among surfaces of the first flow path portion 401, at least an inner surface of the first flow path portion 401 adjacent to the electrolyzed water IL includes a Teflon resin layer. This Teflon resin layer is an insulating Teflon layer.

In addition, as an optional embodiment, from among surfaces of the first flow path portion 401, the inner surface of the first flow path portion 401 adjacent to the electrolyzed water IL may include an anti-static Teflon resin layer.

In addition, as an optional embodiment, inner surfaces of regions connected to the pump portion PP and the vent portion VT of the first flow path portion 401 may include an anti-static Teflon resin layer.

FIG. 8 is a diagram illustrating an optional embodiment of a first flow path portion of the electrode boiler system of FIG. 5.

The first flow path portion 401 of the present embodiment may include an outer layer 401a and an inner layer TFL.

The outer layer 401a may include a variety of materials, for example a durable material such as metal.

As an optional embodiment, the outer layer 401a may include an insulating material. For example, resin or ceramic may be included.

The inner layer TFL includes insulating resin. In addition, the inner layer TFL includes an insulating Teflon layer.

In addition, as another example, the inner layer TFL may include an anti-static Teflon resin layer.

In this case, as an optional embodiment, the inner layer may be formed on the entire inner surface of the outer layer 401a of the first flow path portion 401, and as another example, the inner layer may be formed only on an inner surface adjacent to the electrolyzed water IL of the outer layer.

As an optional embodiment, the inner layer TFL may be formed in an inner region of the first flow path portion 401 connected to the pump portion PP and an inner region of the first flow path portion connected to the vent portion VT.

Through this, the electrolyzed water IL of the first flow path portion 401 may be in contact with the inner layer TFL, the electrical and thermal efficiency of the electrolyzed water IL may be improved, and the risk due to a short circuit may be reduced.

The second flow path portion 402 may be formed to be connected to the body portion 410. The second flow path portion 402 may be connected to the body portion 410 so that the electrolyzed water IL flows into the body portion 410.

The electrolyzed water IL come out of the body portion 410, for example, the electrolyzed water IL heated by the current applied to the electrode portion 420 may be delivered to the heat exchange portion 480 through the first flow path portion 401.

The electrolyzed water IL which has been received by the heat exchange portion 480 may be an electrolyzed water of which temperature is lowered, that is, a cool electrolyzed water, and the electrolyzed water IL which is cool may be introduced into the body portion 410 through the second flow path portion 402.

In addition, the electrolyzed water IL introduced into the body portion through the second flow path portion 402 may be heated by the current by the electrode portion 420 and flow out to the heat exchange portion 480 through the first flow path portion 401 again.

As an optional embodiment, the second flow path portion 402 may be connected to a lower portion of the body portion 410, and the "lower portion" may be a portion closer to the ground than the upper portion of the body portion 410 to which the first flow path portion 401 is connected.

As an optional embodiment, a supplementary portion 450 connected to the second flow path portion 402 may be disposed.

The supplementary portion 450 may be connected to the second flow path portion 402 to supply electrolyzed water IL to the second flow path portion 402.

As an optional embodiment, the supplementary portion 450 may be connected to a separately provided supply portion not illustrated to receive the electrolyzed water IL from the supply portion.

The supplementary portion 450 may be connected to the second flow path portion 402 so that the electrolyzed water IL joins with the electrolyzed water IL having a lower temperature than the electrolyzed water IL flowing in the first flow path portion 401. Through this, overflow or abnormal vapor pressure increase in the first flow path portion 401 due to the rapid replenish of the heated electrolyzed water IL may be reduced or prevented.

The second flow path portion 402 may include various materials. For example, the second flow path portion 402 may include a material having durability and heat resistance, specifically metal, so as to withstand rapid flow and heating of electrolyzed water IL.

The second flow path portion 402 includes an insulating material.

The second flow path portion 402 includes Teflon resin, which is a fluorine resin.

From among surfaces of the second flow path portion 402, at least an inner surface of the second flow path portion 402 adjacent to the electrolyzed water IL includes a Teflon resin layer. This Teflon resin layer is an insulating Teflon layer.

In addition, as an optional embodiment, from among surfaces of the second flow path portion 402, the inner surface of the second flow path portion 402 adjacent to the electrolyzed water IL may include an anti-static Teflon resin layer.

In addition, as an optional embodiment, an inner surface of a region connected to the supplementary portion 450 of the second flow path portion 402 may include an anti-static Teflon resin layer.

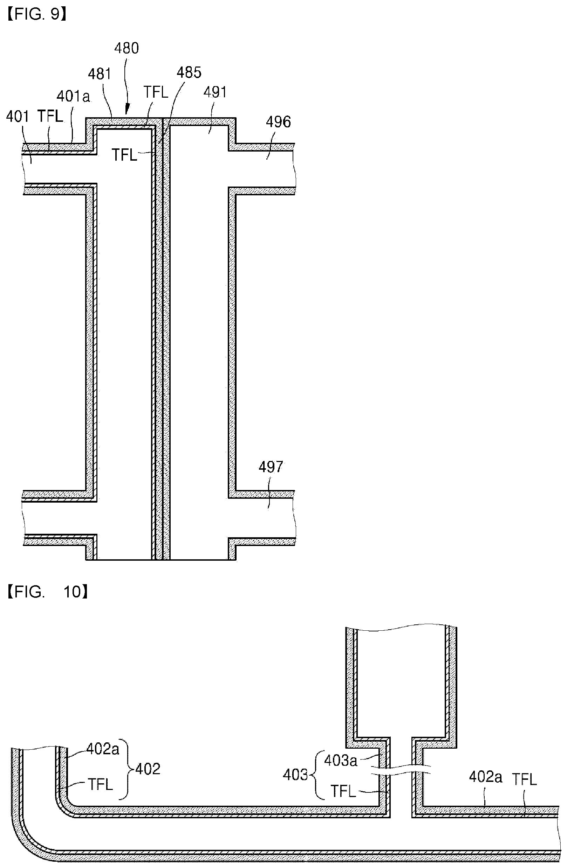

FIG. 10 is a diagram illustrating an optional embodiment of a second flow path portion of the electrode boiler system of FIG. 5.

The second flow path portion 402 of the present embodiment may include an outer layer 402a and an inner layer TFL.

The outer layer 402a may include a variety of materials, for example a durable material such as metal.

As an optional embodiment, the outer layer 402a may include an insulating material. For example, resin or ceramic may be included.

The inner layer TFL includes insulating resin. In addition, the inner layer TFL includes an insulating Teflon layer.

In addition, as another example, the inner layer TFL may include an anti-static Teflon resin layer.

In this case, as an optional embodiment, the inner layer may be formed on the entire inner surface of the outer layer 402a of the second flow path portion 402, and as another example, the inner layer may be formed only on an inner surface adjacent to the electrolyzed water IL of the outer layer.

As an optional embodiment, the inner layer TFL may also be formed in an inner region of the second flow path portion 402 connected to the supplementary portion 450.

Through this, the electrolyzed water IL of the second flow path portion 402 may be in contact with the inner layer TFL, the electrical and thermal efficiency of the electrolyzed water IL may be improved, and the risk due to a short circuit may be reduced.

The heat exchange portion 480 may receive the electrolyzed water IL heated by the electrode portion 420 in the body portion 410 and delivered through the first flow path portion 401, and the electrolyzed water delivered to the heat exchange portion may be used to heat various types of intermediate materials, for example water.

Through this, the heated electrolyzed water IL delivered to the heat exchange portion 480 may be used a heat source to heat an intermediate material, for example water.

In this embodiment, specifically, the heat exchange portion 480 may be connected to the heat receiving portion 491 to transmit heat to the heat receiving portion 491.

As an optional embodiment, the heat exchange portion 480 and the heat receiving portion 491 may be disposed to be in contact with each other with a boundary wall 485 therebetween, and heat may be transferred easily from the heated electrolyzed water IL in the heat exchange portion 480 to the heat receiving portion 491.

For example, a fluid such as water may be accommodated in the heat receiving portion 491, and low or room temperature water introduced through an inlet 496 may be heated by receiving heat from the heat exchange portion 480, and may be discharged through an outlet 497.

As another example, gas may be accommodated in the heat receiving portion 491.

In addition, when cooled by transferring the heat of the heated electrolyzed water IL in the heat exchange portion 480 to the heat receiving portion 491, the electrolyzed water IL may move again to the body portion 410 through the second flow path portion 402 as described above.

As an optional embodiment, when the electrolyzed water IL is lost or evaporated, the electrolyzed water IL may be supplied to the second flow path portion 402 by controlling the supplementary portion 450.

The heat exchange portion 480 may include various materials. For example, the heat exchange portion 480 may include a material having durability and heat resistance, specifically metal, to withstand rapid flow and heating of electrolyzed water IL.

As an optional embodiment, the heat exchange portion 480 may include an insulating material. For example, resin or ceramic may be included.

As another example, the heat exchange portion 480 may include Teflon resin, which is a fluorine resin.

As an optional embodiment, from among the surfaces of the heat exchange portion 480, at least an inner surface of the heat exchange portion 480 adjacent to the electrolyzed water IL may include a Teflon resin layer. This Teflon resin layer may be an insulating Teflon layer.

In addition, as an optional embodiment, from among the surfaces of the heat exchange portion 480, the inner surface of the heat exchange portion 480 adjacent to the electrolyzed water IL may include an anti-static Teflon resin layer.

As an optional embodiment, from among surfaces of the boundary wall 485, a surface of the boundary wall 485 facing the heat exchange portion 480 may include an insulating material. For example, resin or ceramic may be included. As another example, from among surfaces of the boundary wall 485, a surface of the boundary wall 485 facing the heat exchange portion 480 may include a Teflon resin, which is a fluorine resin.

As an optional embodiment, from among surfaces of the boundary wall 485, at least a surface of the boundary wall 485 facing the heat exchange portion 480 may include an insulating material. This Teflon resin layer may be an insulating Teflon layer.

As an optional embodiment, from among surfaces of the boundary wall 485, a surface of the boundary wall 485 facing the heat exchange portion 480 may include an anti-static Teflon resin layer.

FIG. 9 is a diagram illustrating an optional embodiment of the heat exchange portion of the electrode boiler system of FIG. 5.

The heat exchange portion 480 according to the present embodiment may include an outer layer 481 and an inner layer TFL.

The outer layer 481 may include a variety of materials, for example a durable material such as metal.

As an optional embodiment, the outer layer 481 may include an insulating material. For example, resin or ceramic may be included.

The inner layer TFL may include insulating resin. In addition, as another example, the inner layer TFL may include an insulating Teflon layer.

In addition, as another example, the inner layer TFL may include an anti-static Teflon resin layer.

In this case, as an optional embodiment, the inner layer may be formed on the entire inner surface of the outer layer 481 of the heat exchange portion 480, and as another example, the inner layer may be formed only on an inner surface adjacent to the electrolyzed water IL of the outer layer.

As an optional embodiment, the inner layer TFL may also be formed inside the boundary wall 485.

Through this, the electrolyzed water IL of the heat exchange portion 480 may be in contact with the inner layer TFL, the electrical and thermal efficiency of the electrolyzed water IL may be improved, and the risk due to a short circuit may be reduced.

As an optional embodiment, a temperature sensing portion 440 may be connected to the second flow path portion 402 to measure a temperature of the electrolyzed water IL passing through the second flow path portion 402.

For example, the temperature sensing portion may be formed and disposed to measure the temperature of the electrolyzed water IL in the second flow path portion 402 in real time.

As an optional embodiment, the temperature sensing portion 440 is connected to the second flow path portion 402 and reduces or prevents temperature measurement accuracy reduction, performance degradation, and occurrence of malfunctions or defects due to the heated electrolyzed water IL flowing through the first flow path portion 401.

As an optional embodiment, a cooling portion not illustrated may be disposed adjacent to the temperature sensing portion 440 to prevent overheating of the temperature sensing portion 440.

A control portion 430 may be formed to control a current applied to the electrode portion 420.

As an optional embodiment, the control portion 430 may be connected to the conductive portion WL connected to the electrodes 421, 422, 423 of the electrode portion 420.

Through this, the control portion 430 may control the current applied to the electrode portion 420 in real time.

At this time, the control portion 430 may check an amount of current applied to the electrode portion 420 and control the current to increase or decrease according to a set value.

As an optional embodiment, the control portion 430 may check the amount of current applied to the electrode portion 420 in real time and control the current to increase or decrease according to the set value, thereby reducing a rapid temperature change of the electrolyzed water IL.

In addition, as an optional embodiment, the control portion 430 may be connected to the temperature sensing portion 440, and may control the current applied to the electrode portion 420 by using the temperature measured by the temperature sensing portion 440. For example, when the temperature measured by the temperature sensing portion 440 exceeds a normal range, the current applied to the electrode portion 420 may be decreased below a normal range, and when the temperature measured by the temperature sensing portion 440 is less than the normal range, the current applied to the electrode portion 420 may be increased above the normal range.

In this case, the control portion 430 may have information on "decreased temperature" or "increased temperature" set higher or lower than the normal range as a preset value.

In addition, as another example, the control portion 430 may change the current according to the "increased width" and "decreased width" corresponding to a difference value obtained by comparing the normal range of the measured temperature, and the control portion 430 may have the information on a value of the current to be changed according to the preset "increased width" and "decreased width".

As an optional embodiment, the control portion 430 may be separated from the temperature sensing portion 440 and connected through communication.

As another example, the control portion 430 may be disposed to be connected to the temperature sensing portion 440, and specifically, the control portion 430 may be disposed on a surface of the temperature sensing portion 440.

In addition, as another example, the control portion 430 may be integrally formed with the temperature sensing portion 440.

The control portion 430 may have various types of easily changing current. For example, the control portion may include various types of switches, and may include a static relay such as a solid-state relay SSR for sensitive and rapid control.

As an optional embodiment, a cooling portion not illustrated may be disposed adjacent to the control portion 430 so that overheating of the control portion 430 is prevented.

As an optional embodiment, in the electrode boiler system 400 of the present embodiment, at least where the electrolyzed water IL flows or the electrolyzed water IL is present, all regions in contact with the electrolyzed water IL may include an insulating layer or a Teflon resin layer such as an anti-static Teflon resin layer.

The electrode boiler system of this embodiment may heat the electrolyzed water in the body portion by controlling the current applied to the electrode of the electrode portion. The heated electrolyzed water is delivered to the heat exchange portion through the first flow path portion, and the heated electrolyzed water may be used as the heat source in the heat exchange portion, and may provide heat to the heat exchange portion adjacent to the heat receiving portion.

In addition, a process in which the electrolyzed water flows from the heat exchange portion to the body portion, and the electrolyzed water is heated and delivered may be repeated.

Through this, hot water or heat may be easily supplied, current applied to the electrode portion may be easily controlled, and electrolyzed water may be stably heated.

In addition, the body portion receiving the electrolyzed water, the heat exchange portion receiving the electrolyzed water, the entire or inner surface of the first flow path portion, and the entire or inner surface of the second flow path portion are formed of insulating material, so the leakage of current is reduced or blocked when the electrolyzed water flows, resulting in implementation of a safe and efficient electrode boiler system.

In addition, in the electrode boiler system of the present embodiment, the region in contact with the electrolyzed water may include an inner layer, for example, an anti-static Teflon resin layer, thereby improving electrical stability as well as thermal efficiency.

As a specific experimental example, it was confirmed that 1720 watts W are required to generate 3600 watts W when an anti-static Teflon resin layer is used, whereas it was confirmed that 3440 watts W are required to generate 3600 watts W when other layer, for example, a resin layer is used, and a coefficient of performance 2.09 when the anti-static Teflon resin layer is used may be increased than a coefficient of performance 1.05 when a general resin layer is used.

As described above, the present disclosure has been described with reference to the embodiments shown in the drawings, but this is only exemplary, and those of ordinary skill in the art will understand that various modifications and equivalent other embodiments are possible therefrom. Therefore, the true technical scope of the present disclosure should be determined by the technical idea of the attached claims.

The specific implementations described in the embodiments are examples, and do not limit the scope of the embodiments in any way. In addition, if there is no specific mention, such as "essential" or "important", it may not be an essential component for applying the present disclosure.

In the specification of the embodiment (especially in the claims), the use of the term "the" and the similar reference term may correspond to both the singular and the plural. In addition, when a range is described in an embodiment, it includes the invention to which individual values belonging to the above range are applied (unless otherwise stated), it is the same as describing each individual value constituting the range in the detailed description. Finally, if there is no clearly stated or contrary to the order of steps constituting the method according to the embodiment, the steps may be performed in an appropriate order. The embodiments are not necessarily limited according to the order of description of the steps. In the embodiments, the use of all examples or illustrative terms (for example, etc.) is merely for describing the embodiments in detail, and the scope of the embodiment is not limited by the above examples or illustrative terms unless limited by the claims. In addition, those skilled in the art can recognize that various modifications, combinations, and changes may be configured according to design conditions and factors within the scope of the appended claims.

### [Industrial Applicability]

The electrode boiler system of this embodiment may heat the electrolyzed water in the body portion by controlling the current applied to the electrode of the electrode portion. The heated electrolyzed water is delivered to the receiving portion through the first flow path portion, and the heated electrolyzed water may be used as the heat source to heat others directly or indirectly in the receiving portion.

In addition, a process in which the electrolyzed water flows from the receiving portion to the body portion, and the electrolyzed water is heated and delivered may be repeated.

Through this, hot water or heat may be easily supplied, current applied to the electrode portion may be easily controlled, and electrolyzed water may be stably heated.

In addition, the body portion receiving the electrolyzed water, the receiving portion receiving the electrolyzed water, the entire or inner surface of the first flow path portion, and the entire or inner surface of the second flow path portion are formed of insulating material, so the leakage of current is reduced or blocked when the electrolyzed water flows, resulting in implementation of a safe and efficient electrode boiler system.
repeated.

Through this, hot water or heat may be easily supplied, current applied to the electrode portion may be easily controlled, and electrolyzed water may be stably heated.

In addition, the body portion receiving the electrolyzed water, the receiving portion receiving the electrolyzed water, the entire or inner surface of the first flow path portion, and the entire or inner surface of the second flow path portion are formed of insulating material, so the leakage of current is reduced or blocked when the electrolyzed water flows, resulting in implementation of a safe and efficient electrode boiler system.

## Claims

1. An electrode boiler system (100, 200, 300, 400) comprises:
a body portion (110, 210, 310, 410) formed to receive the electrolyzed water (IL) herein;
an electrode portion (120, 220, 320, 420) having a plurality of electrodes (121-123, 221-223, 321-323, 421-423) disposed in the body portion (110, 210, 310, 410), wherein at least a portion of a plurality of electrodes contacts the electrolyzed water (IL) within the body portion (110, 210, 310, 410);
a first flow path portion (101, 201, 301, 401) through which the electrolyzed water (IL) inside the body portion (110, 210, 310, 410) flows out and moves after heated by a current applied to the electrode portion (120, 220, 320, 420);
a second flow path portion (102, 202, 302, 402) which is spaced apart from the first flow path portion and through which the electrolyzed water flows into the body portion; and
a control portion (130, 230, 330, 430) to control the current applied to the electrode portion
**characterised in that**
an insulating Teflon resin layer is formed on the inner surface of the body portion (110, 210, 310, 410) to be spaced apart from the electrode portion (120, 220, 320, 420) and face the electrode portion (120, 220, 320, 420), separately from the electrode portion (120, 220, 320, 420),
the electrolyzed water (IL) is disposed between the insulating Teflon resin layer and the electrode portion (120, 220, 320, 420) inside the body portion (110, 210, 310, 410),
an insulating Teflon resin layer is formed on the inner surface of the first flow path portion (101, 201, 301, 401), the electrolyzed water (IL) is formed to move while in contact with the insulating Teflon resin layer formed on the inner surface of the first flow path portion (101, 201, 301, 401) and,
an insulating Teflon resin layer is formed on the inner surface of the second flow path portion (102, 202, 302, 402), the electrolyzed water (IL) is formed to move while in contact with the insulating Teflon resin layer formed on the inner surface of the second flow path portion (102, 202, 302, 402).

2. The electrode boiler system of claim 1, further comprising a receiving portion (190) disposed between the first flow path portion (101, 201, 301, 401) and the second flow path portion (102, 202, 302, 402) and formed to receive the electrolyzed water (IL).

3. The electrode boiler system of claim 1, further comprising
a heat exchange portion (280, 380, 480) disposed between the first flow path portion (101, 201, 301, 401) and the second flow path portion (102, 202, 302, 402),
wherein the heated electrolyzed water (IL) flows into the heat exchange portion (280, 380, 480) through the first flow path portion (101, 201, 301, 401), and
wherein the electrolyzed water whose temperature has decreased in the heat exchange portion (280, 380, 480) flows into the body portion (110, 210, 310, 410) through the second flow path portion (102, 202, 302, 402).

4. The electrode boiler system of claim 3, further comprising
a heat receiving portion (391, 491) formed to be adjacent to the heat exchange portion (280, 380, 480) and receiving heat from the electrolyzed water (IL) in the heat exchange portion (280, 380, 480).

5. The electrode boiler system of claim 1, further comprising
a pump portion (PP) connected to the first flow path portion (101, 201, 301, 401) and controlling a flow of electrolyzed water (IL) in the first flow path portion (101, 201, 301, 401).

6. The electrode boiler system of claim 1, further comprising
a vent portion (VT) connected to the first flow path portion (101, 201, 301, 401) and controlling a vapor pressure in the first flow path portion (101, 201, 301, 401).

7. The electrode boiler system of claim 1, further comprising
a supplementary portion (150, 250, 350, 450) connected to the second flow path portion (102, 202, 302, 402) and replenishing the electrolyzed water (IL) into the second flow path portion (102, 202, 302, 402).

8. The electrode boiler system of claim 1, further comprising
a temperature sensing portion (140, 240, 340, 440) connected to the second flow path portion (102, 202, 302, 402) and sensing a temperature of the electrolyzed water (IL) in the second flow path portion (102, 202, 302, 402),
wherein the control portion (130, 230, 330, 430) is formed to use information about the temperature sensed by the temperature sensing portion (140, 240, 340, 440).

9. The electrode boiler system of claim 1,
wherein a portion of a region of the body portion (110, 210, 310, 410), the first flow path portion (101, 201, 301, 401), or the second flow path portion (102, 202, 302, 402) includes an anti-static Teflon resin layer.

## Patentansprüche

1. Elektrodenkesselsystem (100, 200, 300, 400), umfassend:
einen Körperabschnitt (110, 210, 310, 410), der ausgebildet ist, um das elektrolysierte Wasser (IL) darin aufzunehmen;
einen Elektrodenabschnitt (120, 220, 320, 420), der eine Vielzahl von Elektroden (121-123, 221-223, 321-323, 421-423) aufweist, die im Körperabschnitt (110, 210, 310, 410) angeordnet sind, wobei mindestens ein Abschnitt einer Vielzahl von Elektroden mit dem elektrolysierten Wasser (IL) innerhalb des Körperabschnitts (110, 210, 310, 410) in Kontakt steht;
einen ersten Strömungswegabschnitt (101, 201, 301, 401), durch den das elektrolysierte Wasser (IL) innerhalb des Körperabschnitts (110, 210, 310, 410) austritt und sich bewegt, nachdem es durch einen an den Elektrodenabschnitt (120, 220, 320, 420) angelegten Strom erwärmt wurde;
einen zweiten Strömungswegabschnitt (102, 202, 302, 402), der vom ersten Strömungswegabschnitt beabstandet ist und durch den das elektrolysierte Wasser in den Körperabschnitt strömt; und
einen Steuerungsabschnitt (130, 230, 330, 430), um den an den Elektrodenabschnitt angelegten Strom zu steuern,
**dadurch gekennzeichnet, dass**
eine isolierende Teflonharzschicht so auf der inneren Oberfläche des Körperabschnitts (110, 210, 310, 410) ausgebildet ist, dass sie vom Elektrodenabschnitt (120, 220, 320, 420) beabstandet ist und dem Elektrodenabschnitt (120, 220, 320, 420) zugewandt ist, getrennt vom Elektrodenabschnitt (120, 220, 320, 420),
das elektrolysierte Wasser (IL) sich zwischen der isolierenden Teflonharzschicht und dem Elektrodenbereich (120, 220, 320, 420) innerhalb des Gehäusebereichs (110, 210, 310, 410) befindet,
eine isolierende Teflonharzschicht auf der inneren Oberfläche des ersten Strömungswegabschnitts (101, 201, 301, 401) ausgebildet ist, wobei das elektrolysierte Wasser (IL) ausgebildet ist, um sich zu bewegen, während es mit der isolierenden Teflonharzschicht in Kontakt steht, die auf der inneren Oberfläche des ersten Strömungswegabschnitts (101, 201, 301, 401) ausgebildet ist, und
eine isolierende Teflonharzschicht auf der inneren Oberfläche des zweiten Strömungswegabschnitts (102, 202, 302, 402) ausgebildet ist, wobei das elektrolysierte Wasser (IL) ausgebildet ist, um sich zu bewegen, während es mit der isolierenden Teflonharzschicht in Kontakt steht, die auf der inneren Oberfläche des zweiten Strömungswegabschnitts (102, 202, 302, 402) ausgebildet ist.

2. Elektrodenkesselsystem nach Anspruch 1, weiter umfassend einen Aufnahmeabschnitt (190), der zwischen dem ersten Strömungswegabschnitt (101, 201, 301, 401) und dem zweiten Strömungswegabschnitt (102, 202, 302, 402) angeordnet ist und dafür ausgebildet ist, das elektrolysierte Wasser (IL) aufzunehmen.

3. Elektrodenkesselsystem nach Anspruch 1, weiter umfassend
einen Wärmeaustauschabschnitt (280, 380, 480), der zwischen dem ersten Strömungswegabschnitt (101, 201, 301, 401) und dem zweiten Strömungswegabschnitt (102, 202, 302, 402) angeordnet ist, wobei das erwärmte elektrolysierte Wasser (IL) durch den ersten Strömungswegabschnitt (101, 201, 301, 401) in den Wärmeaustauschabschnitt (280, 380, 480) strömt, und
wobei das elektrolysierte Wasser, dessen Temperatur im Wärmeaustauschabschnitt (280, 380, 480) gesunken ist, durch den zweiten Strömungswegabschnitt (102, 202, 302, 402) in den Körperabschnitt (110, 210, 310, 410) strömt.

4. Elektrodenkesselsystem nach Anspruch 3, weiter umfassend
einen Wärmeaufnahmeabschnitt (391, 491), der so ausgebildet ist, dass er an den Wärmeaustauschabschnitt (280, 380, 480) angrenzt, und Wärme vom elektrolysierten Wasser (IL) im Wärmeaustauschabschnitt (280, 380, 480) aufnimmt.

5. Elektrodenkesselsystem nach Anspruch 1, weiter umfassend
einen Pumpenabschnitt (PP), der mit dem ersten Strömungswegabschnitt (101, 201, 301, 401) verbunden ist und eine Strömung von elektrolysiertem Wasser (IL) im ersten Strömungswegabschnitt (101, 201, 301, 401) steuert.

6. Elektrodenkesselsystem nach Anspruch 1, weiter umfassend
einen Entlüftungsabschnitt (VT), der mit dem ersten Strömungswegabschnitt (101, 201, 301, 401) verbunden ist und einen Dampfdruck im ersten Strömungswegabschnitt (101, 201, 301, 401) steuert.

7. Elektrodenkesselsystem nach Anspruch 1, weiter umfassend
einen Ergänzungsabschnitt (150, 250, 350, 450), der mit dem zweiten Strömungswegabschnitt (102, 202, 302, 402) verbunden ist und das elektrolysierte Wasser (IL) in den zweiten Strömungswegabschnitt (102, 202, 302, 402) auffüllt.

8. Elektrodenkesselsystem nach Anspruch 1, weiter umfassend
einen Temperaturerfassungsabschnitt (140, 240, 340, 440), der mit dem zweiten Strömungswegabschnitt (102, 202, 302, 402) verbunden ist und eine Temperatur des elektrolysierten Wassers (IL) im zweiten Strömungswegabschnitt (102, 202, 302, 402) erfasst,
wobei der Steuerungsabschnitt (130, 230, 330, 430) dafür ausgebildet ist, Informationen über die durch den Temperaturerfassungsabschnitt (140, 240, 340, 440) erfasste Temperatur zu verwenden.

9. Elektrodenkesselsystem nach Anspruch 1,
wobei ein Abschnitt eines Bereichs des Körperabschnitts (110, 210, 310, 410), des ersten Strömungswegabschnitts (101, 201, 301, 401) oder des zweiten Strömungswegabschnitts (102, 202, 302, 402) eine antistatische Teflonharzschicht einschließt.

## Revendications

1. Système de chaudière à électrodes (100, 200, 300, 400) comprenant :
une partie du corps (110, 210, 310, 410) formée pour y recevoir l'eau électrolysée (IL) ;
une partie d'électrode (120, 220, 320, 420) présentant une pluralité d'électrodes (121-123, 221-223, 321-323, 421-423) disposées dans la partie du corps (110, 210, 310, 410), dans lequel au moins une partie d'une pluralité d'électrodes est en contact avec l'eau électrolysée (IL) à l'intérieur de la partie du corps (110, 210, 310, 410) ;
une première partie de chemin d'écoulement (101, 201, 301, 401), à travers laquelle l'eau électrolysée (IL) à l'intérieur de la partie du corps (110, 210, 310, 410) s'écoule et se déplace après avoir été chauffée par un courant appliqué à la partie d'électrode (120, 220, 320, 420) ;
une seconde partie de chemin d'écoulement (102, 202, 302, 402) qui est espacée de la première partie de chemin d'écoulement et par laquelle l'eau électrolysée s'écoule dans la partie du corps ; et
une partie de commande (130, 230, 330, 430) pour commander le courant appliqué à la partie d'électrode
**caractérisé en ce que**
une couche isolante en résine de Téflon est formée sur la surface intérieure de la partie du corps (110, 210, 310, 410) pour être espacée de la partie d'électrode (120, 220, 320, 420) et faire face à la partie d'électrode (120, 220, 320, 420), séparément de la partie d'électrode (120, 220, 320, 420),
l'eau électrolysée (IL) est disposée entre la couche isolante en résine de Téflon et la partie d'électrode (120, 220, 320, 420) à l'intérieur de la partie du corps (110, 210, 310, 410),
une couche isolante en résine de Téflon est formée sur la surface intérieure de la première partie du chemin d'écoulement (101, 201, 301, 401), l'eau électrolysée (IL) est formée pour se déplacer tout en étant au contact de la couche isolante en résine de Téflon formée sur la surface intérieure de la première partie du chemin d'écoulement (101, 201, 301, 401) et,
une couche isolante en résine de Téflon est formée sur la surface intérieure de la seconde partie du chemin d'écoulement (102, 202, 302, 402), l'eau électrolysée (IL) est formée pour se déplacer tout en étant en contact avec la couche isolante en résine de Téflon formée sur la surface intérieure de la seconde partie du chemin d'écoulement (102, 202, 302, 402).

2. Système de chaudière à électrodes selon la revendication 1, comprenant en outre
une partie réceptrice (190) disposée entre la première partie du chemin d'écoulement (101, 201, 301, 401) et la seconde partie du chemin d'écoulement (102, 202, 302, 402) et formée pour recevoir l'eau électrolysée (IL).

3. Système de chaudière à électrodes selon la revendication 1, comprenant en outre
une partie d'échange thermique (280, 380, 480) disposée entre la première partie du chemin d'écoulement (101, 201, 301, 401) et la seconde partie du chemin d'écoulement (102, 202, 302, 402),
dans lequel l'eau électrolysée chauffée (IL) s'écoule dans la partie d'échange thermique (280, 380, 480) à travers la première partie du chemin d'écoulement (101, 201, 301, 401), et
dans lequel l'eau électrolysée, dont la température a diminué dans la partie d'échange thermique (280, 380, 480) s'écoule dans la partie du corps (110, 210, 310, 410) à travers la seconde partie du chemin d'écoulement (102, 202, 302, 402).

4. Système de chaudière à électrodes selon la revendication 3, comprenant en outre
une partie recevant de la chaleur (391, 491) formée pour être adjacente à la partie d'échange thermique (280, 380, 480) et recevant de la chaleur de l'eau électrolysée (IL) dans la partie d'échange thermique (280, 380, 480).

5. Système de chaudière à électrodes selon la revendication 1, comprenant en outre
une partie de pompe (PP) connectée à la première partie du chemin d'écoulement (101, 201, 301, 401) et commandant un flux d'eau électrolysée (IL) dans la première partie du chemin d'écoulement (101, 201, 301, 401).

6. Système de chaudière à électrodes selon la revendication 1, comprenant en outre
une partie d'évent (VT) connectée à la première partie du chemin d'écoulement (101, 201, 301, 401) et commandant une pression de vapeur dans la première partie du chemin d'écoulement (101, 201, 301, 401).

7. Système de chaudière à électrodes selon la revendication 1, comprenant en outre
une partie supplémentaire (150, 250, 350, 450) connectée à la seconde partie du chemin d'écoulement (102, 202, 302, 402) et réapprovisionnant l'eau électrolysée (IL) dans la seconde partie du chemin d'écoulement (102, 202, 302, 402).

8. Système de chaudière à électrodes selon la revendication 1, comprenant en outre
une partie de détection de température (140, 240, 340, 440) connectée à la seconde partie du chemin d'écoulement (102, 202, 302, 402) et détectant une température de l'eau électrolysée (IL) dans la seconde partie du chemin d'écoulement (102, 202, 302, 402),
dans lequel la partie de commande (130, 230, 330, 430) est formée pour utiliser les informations sur la température détectée par la partie de détection de température (140, 240, 340, 440).

9. Système de chaudière à électrodes selon la revendication 1,
dans lequel une partie d'une région de la partie du corps (110, 210, 310, 410), la première partie du chemin d'écoulement (101, 201, 301, 401) ou la seconde partie du chemin d'écoulement (102, 202, 302, 402) inclut une couche en résine de Téflon antistatique.
